# EUROPEAN PATENT SPECIFICATION

(11) **EP 0 547 583 B1**
(45) Date of publication and mention of the grant of the patent: **11.09.1996**
(21) Application number: 92121401.1
(22) Date of filing: 16.12.1992
(51) Int. Cl.: B62D 23/00, B62D 29/00, B62D 31/00

(54) **Motor vehicle with a perfected body**
Kraftfahrzeug mit verbessertem Aufbau
Véhicule automobile avec caisse perfectionnée

(30) Priority: 17.12.1991 IT TO910312 U
(43) Date of publication of application: 23.06.1993
(73) Proprietor: FIAT AUTO S.p.A., I-10135 Torino (IT)
(72) Inventor: Gandiglio, Romolo, I-14019 Villanova D'Asti (IT); Filtri, Luigi, I-10100 Torino (IT)
(74) Representative: Plebani, Rinaldo

(56) References cited:
- EP-A- 0 240 470
- EP-A- 0 250 678
- EP-A- 0 338 999
- DE-A- 2 644 666
- DE-A- 3 035 333
- FR-A- 2 521 939
- US-A- 2 192 075

## Description

The present invention relates to a motor vehicle with a perfected body comprising only three welded/bonded main elements.

The current state of the art includes motor vehicles with load-bearing base frames to which the bodywork and mechanical parts are fitted; and motor vehicles with unitized bodies.

In addition to being fairly expensive on account of the time-consuming assembly operations involved, vehicles with base frames to which the bodywork and mechanical parts are fitted also present a weak structure by virtue of the body parts being arranged in the form of a "shell" about the load-bearing frame. When subjected to severe dynamic stress, as in the case of a collision, the body parts constituting the "shell" may even become detached from the supporting frame.

Vehicles with unitized bodies, on the other hand, substantially consist of a base supporting in one unit the other body parts, which are all self-supporting and either welded or bolted together. Though far superior in terms of strength and cost as compared with the frame structure, unitized body structures involve complex assembly operations, if produced automatically, or, if assembled manually, high-cost operations the quality of which is difficult to control.

It is an object of the present invention to overcome the aforementioned drawbacks by providing a motor vehicle with a perfected body having a high degree of strength, and which provides for fast, troublefree assembly, thus enabling a reduction in the end cost of the vehicle.

According to the present invention, a motor vehicle is provided with the features of claim 1. The features of the preamble of claim 1 have been derived from DE-A-3035333.

A non-limiting embodiment of the present invention will be described by way of example with reference to the accompanying drawings, in which:

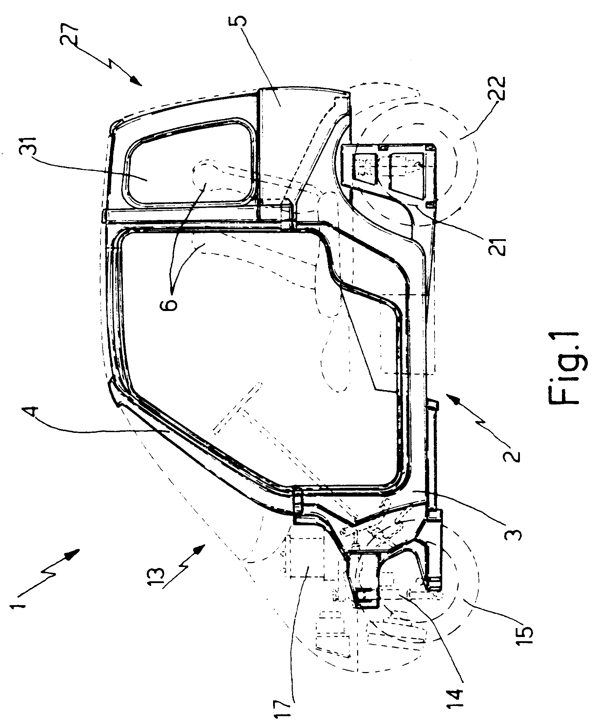

Fig.1 shows a side view of a motor vehicle featuring a perfected body in accordance with the present invention;

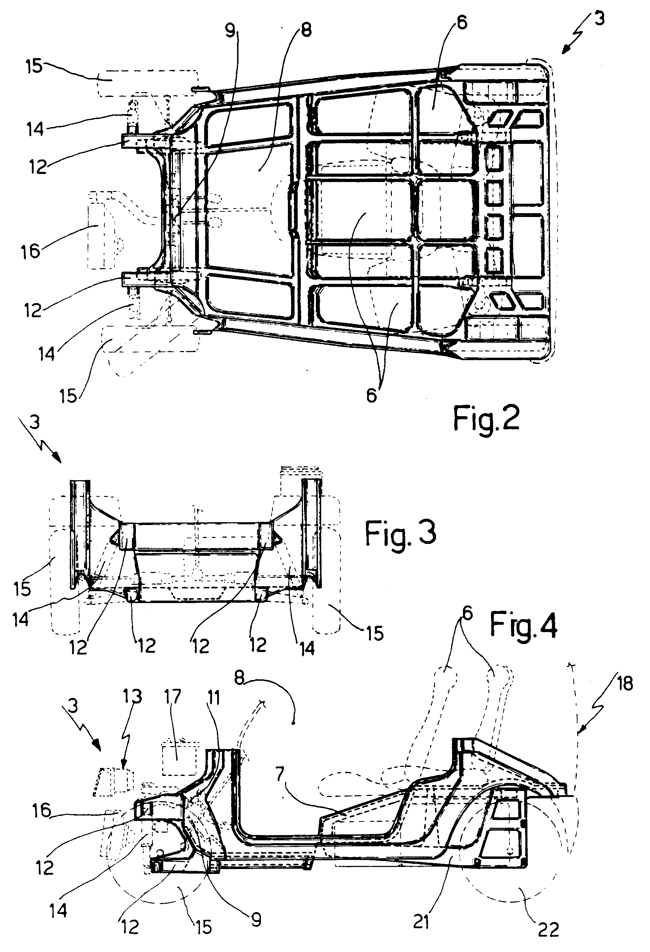

Fig.2 shows a top plan view of a first element of the body on the Fig.1 vehicle;
Fig.3 shows a front view of the Fig.2 element;

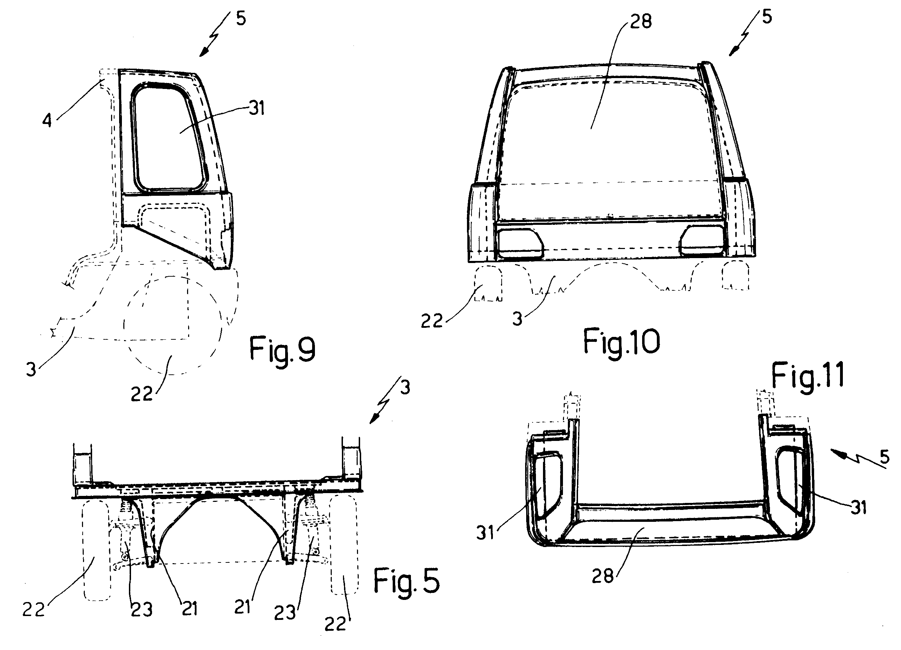

Fig.4 shows a side view of the Fig.2 element;
Fig.5 shows a rear view of the Fig.2 element;

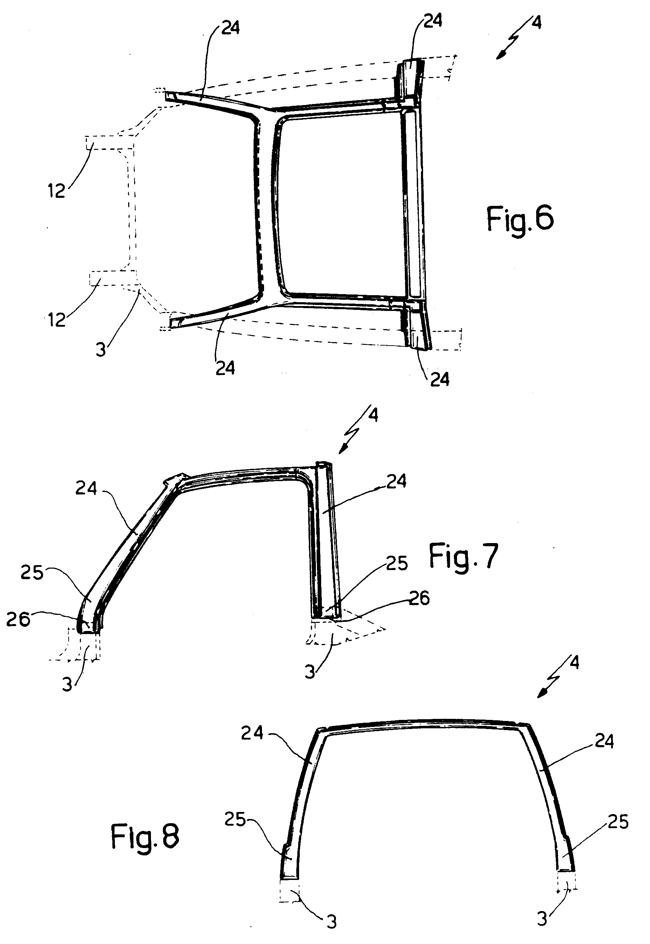

Fig.6 shows a top plan view of a second element of the body on the Fig.1 vehicle;
Fig.7 shows a side view of the Fig.6 element;
Fig.8 shows a front view of the Fig.6 element;
Fig.9 shows a side view of a further element of the body on the Fig.1 vehicle;
Fig.10 shows a rear view of the Fig.9 element;
Fig.11 shows a top plan view of the Fig.9 element;
Fig.12 shows a larger-scale view of a detail on the Fig.4 element according to a preferred embodiment of the present invention;
Fig.13 shows a larger-scale section along line XIII-XIII in Fig.12.

With reference to Fig.s 1 to 11, number 1 indicates a motor vehicle with a body 2 substantially composed of three distinct elements: a first base element 3, a cage structure 4, and a shell structure 5.

As shown in Fig.s 2 to 5, base element 3 substantially consists of a tank-shaped structure, which acts as a base element for cage structure 4 and shell structure 5, and as a supporting element for seats 6, interior fittings 7 of passenger compartment 8, and drive pedals 9 of vehicle 1.

Base element 3 consists of a cast aluminium structure, or a box structure formed from appropriately shaped sheet metal, preferably aluminium sheet; and front portion 11 of element 3 presents side members 12 projecting towards front portion 13 of vehicle 1. Side members 12 provide for supporting respective suspensions 14 of front wheels 15 of vehicle 1, as well as other vehicle components including known body elements (not shown) such as the fenders, bumper and hood, and mechanical elements such as steering box 16, batteries 17 and possibly even a known motor (not shown) housed in front portion 13 of vehicle 1.

The rear portion 18 of base structure 3 presents brackets 21 for supporting respective rear wheels 22 of vehicle 1 and respective suspensions 23.

As shown in Fig.s 6 to 8, cage structure 4 substantially consists of four pillars 24, and is also preferably made of aluminium sheet.

According to the present invention, for increasing the strength of the structure, respective ends 25 of pillars 24 of cage structure 4 are inserted slightly and finally welded inside respective seats 26 on base structure 3.

In actual use, cage structure 4 provides for supporting a known roof and windshield (not shown) of vehicle 1.

Shell structure 5 in Fig.s 9 to 11 is located at rear portion 27 of vehicle 1, and, like the structures already described, is preferably made of aluminium sheet.

According to the present invention, shell structure 5 encloses rear portion 27 of vehicle 1, and, in use, acts as a support for tailgate 28 or a fixed rear window (not shown), for any rear side windows 31, and for a known rear light assembly (not shown).

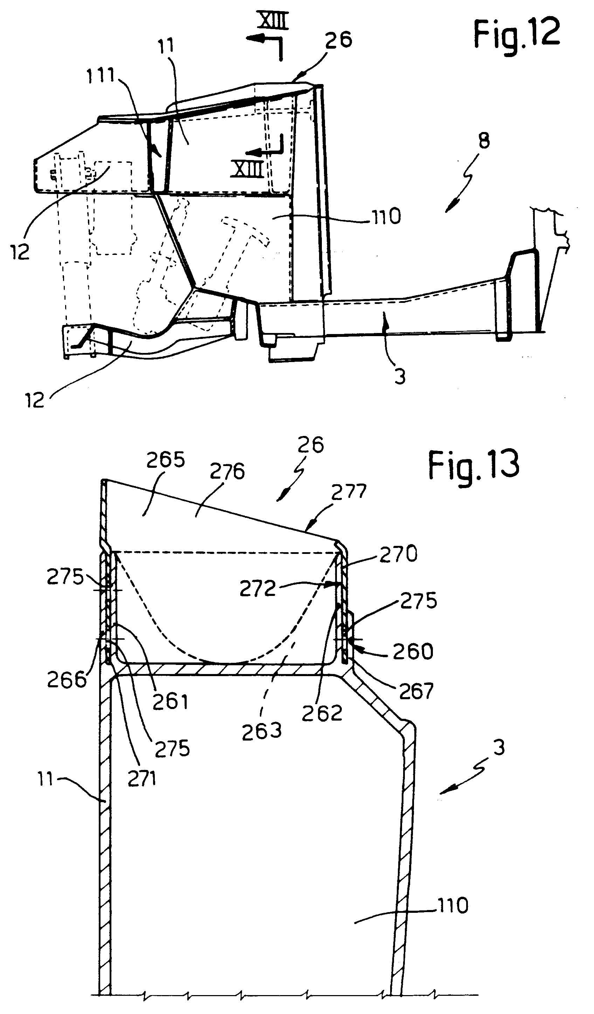

With reference to Fig.s 12 and 13, front portion 11 of base structure 3 is preferably formed as shown in Fig.12, wherein it comprises a cross member 110 arranged so as to define a separating element between passenger compartment 8 and the utility compartment defined by side members 12, which extend from portions close to the opposite ends of cross member 110, which are shaped so as to define at least part of the front fenders and/or wheel housings. On top, cross member 110 defines a channel 111 (e.g. for channeling air in the air conditioning system of the vehicle); and, at the opposite ends of cross member 110 and on the same side as channel 111, base 3 presents seats 26 for ends 25 of pillars 24. More specifically (Fig.13), base 3 is in the form of a one-piece cast aluminium (or light alloy) trestle structure, while seats 26 are in the form of composite elements. In the example shown, each seat 26 comprises a base portion 260 cast in one piece with base structure 3; and an extruded aluminium insert 265 cast together with structure 3.

According to the present invention, base portion 260 comprises at least a front wall 261 facing side members 12 and an opposite rear wall 262 facing passenger compartment 8; and at least one rib 263 transversely connecting walls 261 and 262. At the bottom, walls 261 and 262 present respective thicker portions 266 and 267 differing in height, the height of portion 266 being greater than that of 267 and substantially equal to the full height of wall 261. Insert 265 is in the form of an extruded tubular section having a thin lateral wall 270 thinner than portions 266, 267 of walls 261, 262 and such as to enable permanent deformation, e.g. heading or similar, of insert 265. A bottom portion 271 of insert 265 is sunk into base portion 260, more specifically, inside portions 266, 267 of walls 261, 262, which contact and cooperate with inner surface 272 of lateral wall 270.

At portion 271, lateral wall 270 presents through holes 275; and, at top portion 276 of insert 265, wall 270 is headed on to base 260 towards side members 12. Top portion 276 is defined by an oblique edge 277 sloping downwards towards wall 262 so that insert 265 is higher on the wall 261 side.

Inserts 265 may thus be made of other material than that of base structure 3, and which (in the case of extruded aluminium, for example) may be easily welded to the material of cage 4 (made of shaped and welded aluminium sheet), unlike the material of base structure 3 which, being cast, is anyway unsuitable for welding. Inserts 265, which are extruded separately, are positioned inside the mold of base 3, and the molten aluminium is poured so as to fill holes 275 and ensure, when structure 3 sets, optimum anchorage of structure 3 and inserts 265 sunk into bases 260. Together with inserts 265, bases 260 thus define a hollow structure defining seats 26 for firmly and easily accommodating ends 25.

Subsequently, portion 276 of insert 265 may be headed on to respective end 25 inside seat 26 for providing immediate and sufficient mechanical connection of structure 3 and cage 4 to ensure the two parts are held together during the following body assembly and handling stages. Said connection may subsequently be rendered stable by means of welding (made possible by virtue of the mechanical nature of the material of insert 265 differing from that of the material of base 3 and being compatible with that of the material of cage 4). Alternatively, cage 4 and base 3 may be bonded together, in which case, the adhesive may be inserted beforehand inside seats 26, and, following insertion of ends 25 inside seats 26, heading of portion 276 of insert 265 of each seat 26 provides for holding the body together as the adhesive polymerizes and gradually sets, thus eliminating downtime pending cross linking of the adhesive.

The advantages of the present invention will be clear from the foregoing description. The composition of the body in three distinct elements, preferably made of aluminium sheet (top structure) and cast aluminium (bottom structure) and connected by means of welding/bonding, provides for a high degree of strength of the structure combined with troublefree, fast assembly, thus enabling a reduction in both vehicle production and repair costs.

## Claims

1. A motor vehicle with a perfected body, comprising a first load-bearing base element (3) formed of a one-piece cast aluminium trestle structure; a second distinct element consisting of a cage structure (4) formed of welded aluminium sheet, mounted on the base structure (3) and having a number of pillars (24) fitted with respective ends (25) inside corresponding seats (26) formed on the base structure (3) and defining the front portion of the passenger compartment of the vehicle; and a distinct third element of said body consisting of a shell structure (5) supported by the base structure (3) and defining a rear portion of the vehicle,
characterized by the fact that each of said seats (26) comprises a base portion (260) integral with the cast aluminium base structure (3), and an applied insert element (265) made of material differing from that of the base portion and weldable to the cage structure (4) and at least partially sunk into the base portion (260) as this is cast.

2. A motor vehicle as claimed in Claim 1, characterized in that the insert (265) consists of tubular aluminium extrusion having a thin lateral wall (270), through holes (275) for anchorage to the cast base portion (260), and a top portion (276) remaining outside the base portion and connectable to the cage structure (4) by means of permanent deformation.

3. A motor vehicle as claimed in Claim 1, or 2, characterized in that the base portion (260) of each seat (26) comprises at least a front wall (261) and an opposite rear wall (262), said walls having at the bottom thereof thicker portions (266; 267) adapted to embed corresponding lateral walls (270) of said insert element (265), thinner than the portions (266; 267), as the base portion (260) and the thicker walls (261; 262) are cast.

4. A motor vehicle as Claimed in Claim 1, or 2 or 3, characterized in that said tank-shaped base structure (3) is welded or bonded to said cage structure (4); sid shell structure (5) being welded or bonded to said base structure (3) and and to said cage structure (4).

5. A motor vehicle as claimed in one of the foregoing Claims, characterized by the fact that the front portion (11) of said base structure (3) presents frontward-projecting side members (12).

6. A motor vehicle as claimed in Claim 7, characterized by the fact that said side members (12) provide for supporting respective suspensions (14) of respective front wheels (15) on said vehicle, and respective front body elements of said vehicle.

7. A motor vehicle as claimed in Claim 7, characterized by the fact that said side members (12) may be employed for supporting a motor housed in the front portion (11) of said vehicle.

8. A motor vehicle as claimed in one of the foregoing Claims, characterized by the fact that the rear portion (18) of said base structure (3) presents elements (21) for connecting respective suspensions of respective rear wheels of said vehicle.

9. A motor vehicle as claimed in one of the foregoing Claims, characterized by the fact that said cage structure (4) presents respective elements for fitting a windshield between two respective front pillars; said shell structure (5) in turn presenting respective elements for fitting a tailgate or a fixed rear window and respective rear side windows.

## Patentansprüche

1. Kraftfahrzeug mit verbesserter Karosserie, die ein erstes lasttragendes Grundelement (3), das aus einer einteiligen Bockkonstruktion aus gegossenem Aluminium hergestellt ist; ein zweites hiervon getrenntes Element, das aus einer Käfigstruktur (4) aus geschweißtem Aluminiumblech hergestellt ist, auf der Grundstruktur (3) montiert ist und mehrere Säulen (24) besitzt, die mit den jeweiligen Enden (25) in die zugehörigen Sitze (26), die in der Grundstruktur (3) ausgebildet sind, eingesetzt sind, und den vorderen Abschnitt des Fahrgastraums des Fahrzeugs definiert; sowie ein hiervon getrenntes drittes Element der Karosserie umfaßt, das aus einer Hüllenstruktur (5) besteht, die von der Grundstruktur (3) unterstützt wird und einen hinteren Abschnitt des Fahrzeugs definiert,
**dadurch gekennzeichnet**, daß jeder Sitz (26) einen Grundabschnitt (260), der in Baueinheit mit der gegossenen Aluminiumgrundstruktur (3) ausgebildet ist, sowie ein aufgebrachtes Einsatzelement (265) umfaßt, das aus einem Material hergestellt ist, das sich von demjenigen des Grundabschnitts unterscheidet, mit der Käfigstruktur (4) verschweißt werden kann und wenigstens teilweise im Grundabschnitt (260) versenkt wird, wenn dieser gegossen wird.

2. Kraftfahrzeug nach Anspruch 1, dadurch gekennzeichnet, daß der Einsatz (265) einen rohrförmigen Aluminiumstrangpreßelement mit einer dünnen Seitenwand (270), Durchgangslöcher (265) zur Verankerung am gegossenen Grundabschnitt (260) sowie einen oberen Abschnitt (276) enthält, der außerhalb des Grundabschnitts verbleibt und durch bleibende Verformung mit der Käfigstruktur (4) verbunden werden kann.

3. Kraftfahrzeug nach einem der Ansprüche 1 oder 2, dadurch gekennzeichnet, daß der Grundabschnitt (260) jedes Sitzes (26) wenigstens eine Vorderwand (261) und eine gegenüberliegende Rückwand (262) umfaßt, die am Boden dickere Abschnitte (266, 267) besitzen, die die entsprechenden Seitenwände (270) des Einsatzelements (265) aufnehmen, welche dünner sind als die Abschnitte (266; 267), wenn der Grundabschnitt (260) und die dickeren Wände (261; 262) gegossen werden.

4. Kraftfahrzeug nach einem der Ansprüche 1, 2 oder 3, dadurch gekennzeichnet, daß die tankförmige Grundstruktur (3) mit der Käfigstruktur (4) verschweißt oder verklebt ist; wobei die Hüllenstruktur (5) mit der Grundstruktur (3) und der Käfigstruktur (4) verschweißt oder verklebt ist.

5. Kraftfahrzeug nach einem der vorangehenden Ansprüche, dadurch gekennzeichnet, daß der vordere Abschnitt (11) der Grundstruktur (3) nach vorne vorstehende Seitenelemente (12) aufweist.

6. Kraftfahrzeug nach Anspruch 5, dadurch gekennzeichnet, daß die Seitenelemente (12) zur Unterstützung entsprechender Aufhängungsvorrichtungen (14) der jeweiligen Vorderräder (12) am Fahrzeug und entsprechender vorderer Karosserieteile des Fahrzeugs dienen.

7. Kraftfahrzeug nach Anspruch 5, dadurch gekennzeichnet, daß die Seitenelemente (12) verwendet werden können, um einen im vorderen Abschnitt (11) des Fahrzeugs untergebrachten Motor zu unterstützen.

8. Kraftfahrzeug nach einem der vorangehenden Ansprüche, dadurch gekennzeichnet, daß der hintere Abschnitt (18) der Grundstruktur (3) Elemente (21) aufweist, um entsprechende Aufhängungen für die jeweiligen Hinterräder des Fahrzeuges anzubringen.

9. Kraftfahrzeug nach einem der vorangehenden Ansprüche, dadurch gekennzeichnet, daß die Käfigstruktur (4) entsprechende Elemente aufweist, um eine Windschutzscheibe zwischen zwei entsprechende vordere Säulen einzusetzen; wobei die Hüllenstruktur (5) ihrerseits entsprechende Elemente aufweist, um eine Heckklappe oder ein festes Heckfenster und entsprechende hintere Seitenfenster anzubringen.

## Revendications

1. Véhicule automobile à caisse perfectionnée, comprenant un premier élément de base porteur de charge (3) formé d'une structure en forme de tréteau monobloc en aluminium coulé : un deuxième élément distinct consistant en une structure de cage (4),fabriqué en tôle d'aluminium soudée, monté sur la structure de base (3) et comportant un certain nombre de montants (24) fixés par des extrémités respectives (25) à l'intérieur de sièges correspondants (26) prévus sur la structure de base (3), et définissant la partie avant du compartiment passagers du véhicule ; et un troisième élément distinct de ladite caisse consistant en une structure de coque (5), supporté par la structure de base (3) et définissant une partie arrière du véhicule, caractérisé en ce que chacun desdits sièges (26) comprend une partie de base (260) solidaire de la structure de base en aluminium coulé (3), et un insert appliqué (265) en une matière différente de celle de la partie de base et soudable à la structure de cage (4) et au moins partiellement encastré dans la partie de base (260) lors de la coulée de cette dernière.

2. Véhicule automobile suivant la revendication 1, caractérisé en ce que l'insert (265) est un profilé tubulaire extrudé en aluminium comportant une paroi latérale mince (270), des trous traversants (275) pour ancrage à la partie de base coulée (260), et une partie supérieure (276) qui reste à l'extérieur de la partie de base et est connectable à la structure de cage (4) au moyen d'une déformation permanente.

3. Véhicule automobile suivant la revendication 1 ou 2, caractérisé en ce que la partie de base (260) de chaque siège (26) comprend au moins une paroi avant (261) et une paroi arrière opposée (262), lesdites parois ayant à leur base des parties épaisses (266;267) dans lesquelles on peut encastrer les parois latérales correspondantes (270) dudit insert (265), qui sont plus minces que lesdites parties (266;267),lorsqu'on coule la partie de base (260) et les parois plus épaisses (261:262).

4. Véhicule automobile suivant la revendication 1 ou 2 ou 3, caractérisé en ce que ladite structure de base en forme de cuve (3) est soudée ou collée à ladite structure de cage (4), ladite structure de coque (5) étant soudée ou collée à ladite structure de base (3) et à la dite structure de cage (4).

5. Véhicule automobile suivant une quelconque des revendications précédentes, caractérisé en ce que la partie avant (11) de ladite structure de base (3) présente des bras latéraux s'étendant vers l'avant (12).

6. Véhicule automobile suivant la revendication 7, caractérisé en ce que lesdits bras latéraux (12) sont prévus pour supporter des suspensions respectives (14) des roues avant respectives (15) dudit véhicule, et des éléments de caisse avant respectifs dudit véhicule.

7. Véhicule à moteur suivant la revendication 7, caractérisé en ce que lesdits bras latéraux (12) peuvent servir à supporter un moteur logé dans la partie avant (11) dudit véhicule.

8. Véhicule automobile suivant une des revendications précédentes, caractérisé en ce que la partie arrière. (18) de ladite structure de base (3) comporte des éléments (21) pour la fixation de suspensions respectives des roues arrière respectives dudit véhicule.

9. Véhicule automobile suivant une des revendications précédentes, caractérisé en ce que ladite structure de cage (4) comporte des éléments respectifs pour montage d'un pare-brise entre deux montants avant respectifs, ladite structure de coque (5) comportant elle-même des éléments respectifs pour montage d'un hayon ou d'une vitre arrière fixe et de vitres latérales arrière respectives.
